(19) Europäisches Patentamt
European Patent Office
Office européen des brevets

(11) Publication number: 0 140 019 A1

# (12) EUROPEAN PATENT APPLICATION

(21) Application number: 84110320.3

(22) Date of filing: 30.08.84

(51) Int. Cl.[4]: C 08 L 23/08
C 09 J 3/14, C 09 D 3/733
C 08 L 51/06

(30) Priority: 01.09.83 US 528754

(43) Date of publication of application: 08.05.85 Bulletin 85/19

(84) Designated Contracting States: AT BE CH DE FR GB IT LI NL SE

(71) Applicant: THE DOW CHEMICAL COMPANY
Dow Center 2030 Abbott Road Post Office Box 1967
Midland Michigan 48640(US)

(72) Inventor: Graham, Stephen L.
402 N. Yaupon
Richwood Texas 77531(US)

(72) Inventor: Lacey, Robert S.
11 Eagle Lane Rt. 1
Angleton Texas 77515(US)

(72) Inventor: Plunkett, David O.
105 Dahlia
Lake Jackson Texas 77566(US)

(74) Representative: Hann, Michael, Dr. et al,
Patentanwälte Dr. Michael Hann Dr. H.-G. Sternagel
Marburger Strasse 38
D-6300 Giessen(DE)

## (54) Adhesive and coating composition.

(57) A hot melt adhesive and coating composition comprising a copolymer of ethylene and acrylic acid or methacrylic acid is provided said copolymer characterized as having a melt flow of at least 0.97 and an acrylic acid or methacrylic acid content such that the copolymer has an acid number ranging from 8 to 93.

EP 0 140 019 A1

0140019

# ADHESIVE AND COATING COMPOSITION

(E-1794)

Many normally solid heat-activatable ethylene based interpolymers (e.g., co- and terpolymers) have been developed which are useful as hot melt adhesives and coatings. These include copolymers of ethylene/-vinyl acetate, ethylene/acrylic acid, and ethylene/-methacrylic acid. These polymers are usually mixed with various waxes and tackifiers to form combinations which provide strong, tough adhesives and coatings which adhere to a variety of polar, nonpolar, porous and nonporous substrates. However, it has always been a problem in this art in providing a copolymer of ethylene and acrylic acid which not only functioned well as an adhesive and coating but also was compatible with a wide range of waxes and tackifiers employed to improve the adhesive and coating properties of the base ethylene/acrylic acid resin.

Applicants have discovered an ethylene/-acrylic acid copolymer which not only provides good hot melt adhesive properties, is good for coating various substrates, but also is compatible with a wide variety of waxes and tackifiers known in the art.

This invention comprises a hot melt adhesive composition comprising a normally solid heat-activatable ethylene/acrylic acid (or methacrylic acid) copolymer characterized as falling within the boundries defined by the trapezoidal figure of the drawing wherein points A, B, C, D and E define the boundries. Point A represents a copolymer having an acid number (hereinafter defined) of 23 (mg KOH/g) and a flow rate of 0.97 gm/10 min.; Point B is a copolymer having an acid number of 93 and a flow rate of 69 gm/10 min.; Point C is a copolymer having an acid number of 65 and a flow rate of 69 gm/10 min.; Point D is a copolymer having an acid number of 8 and a flow rate of 69 gm/10 min.; and Point E is a copolymer having an acid number of 8 and a flow rate of 0.97 gm/10 min. The preferred copolymers are those falling within the boundries defined by Points A, C, D and E.

Flow rate, as used herein, is determined by ASTM Method D-1238-70, Procedure A, Condition A. As the flow rate of the copolymer is increased the acid number of the resin may also be increased. Thus, at an acid number of 8 to 23 the flow rate should be at a minimum of 0.97 while at an acid number of 93 the melt flow may range up to 69.

Acid number, as employed herein, is determined by the method described in U.S. Patent No. 4,132,690 (Column 3, line 53 through Column 4, line 16).

These compositions can be employed in such hot melt adhesive applications as, for example, in case sealing, bag making, tray forming, overlap paper laminations, book binding, disposable non-wovens, fusable interfacing and interliners, composite tube assemblies, pallet stabilizations, and heat sealable labels and tapes. They can also be employed as protective coatings such as in paper board liquid containers and the like.

The drawing depicts the region which characterizes the scope of the claimed invention in terms of flow rate and acid content of the copolymer as shown on a log-log graph. The copolymers are those contained within the boundaries of the trapezoidal figure defined by Points A, B, C, D and E.

The copolymer can be prepared in any convenient manner. For example, it can be produced by polymerization techniques which produce a random copolymer of ethylene and acrylic (methacrylic) acid such as taught in U.S. Patent Nos. 4,351,931 and 3,520,861. The copolymer can also be produced by graft polymerization techniques such as taught in U.S. Patent No. 3,177,269. The copolymers may be treated to neutralize some or all of the acid group with a metal ion such as an alkali metal ion. The neutralized copolymers are referred to in the art as ionomers.

The hot melt formulation can be mixed with a wide range of waxes and tackifiers to provide a composition having good compatibility. By good compatability

it is meant that there is limited phase separation of the different constituents at a temperature of 22°C to 232°C, preferably at 120°C to 232°C, for at least 24 hours and more preferably for at least 72 hours. This makes the composition useful in a wide range of applications where various specific characteristics are desired.

Tackifiers are those materials which improve the adhesion properties of the compositions. Preferred are tackifiers based on hydrogenated rosin esters, rosin esters, dibasic acid rosin esters, hydrogenated rosen, terpene hydrocarbons, terpene phenolics, aromatic hydrocarbons, aliphatic hydrocarbons. Examples of these materials are taught in U.S. Patent No. 4,018,733, Column 3, lines 23-68, and glycerol esters of fumarate-modified resin as described in U.S. Patent No. 3,787,346. The tackifier is used to promote adhesion or modify the viscosity of the composition. Normally the tackifier ranges from 0 to 80 percent by weight of the hot melt composition, preferably from 10 to 40 percent by weight.

Various waxes are employed in hot melt adhesives primarily as diluents, viscosity modifiers and softening point modifiers. Petroleum waxes such as paraffins and microcrystalline waxes and synthetic waxes such as Fischer-Tropsch wax, or polyethylene waxes described in U.S. Patent Nos. 2,504,400; 2,683,141 and 2,712,534 are useful. For example, waxes based on polyethylene, oxidized polyethylene, paraffin, oxidized paraffin, oxidized hydrocarbons, and various synthetic waxes such as Polywax 655 (a polyethylene wax from Barreco); Allied 629 (an oxidized polyethylene wax from Allied Chemical); 180M (a microcrystalline wax from Witco); B120 (an oxidized paraffin wax from Durachem) Efton D-Super (an oxidized hydrocarbon wax from Durachem); Cardipol LP (a synthetic wax from Barreco) are useful. The wax is normally employed in an amount ranging from 0 to 80 percent, preferably from 10 to 40 percent by weight of the composition.

Other additives such as pigments, fillers, and processing oils, can be included.

The various additions can be blended with the copolymer in any suitable manner (batch or continuous) for example, by melt blending in a stirred vessel.

The compositions of the present invention can be adhered to various substrates employing delivery systems such as extruders, gear pumps, piston pumps, handguns, and as a powder, through slot dies, nozzels (single or multihead) and various other methods. The adhesive compositions can be applied to a substrate at an elevated temperature, e.g., of about 90°C, preferably from 93°C to 232°C, most preferably at about 177°C. The composition provides good adhesion to substrates such as treated and untreated polyolefins, polyester films, paper, metallic substrates (e.g., aluminum, steel, copper) glass, cellophane, leather and nylon. Similar and dissimilar materials can be bonded together employing the composition of the present invention. The composition is used as an adhesive by applying sufficient heat to a layer of the composition and applying a second substrate or the composition can be cooled and can be employed as a protective coating on nonporous and porous substrates, for example, on cake mix boxes, milk cartons, ice cream containers, margarine wrappers, food trays, paper and foil bags, disposable diapers and protective overwraps. When employed as a coating, a laminate is formed containing the solid substrate and a uniform layer of the composition.

Example 1

Four different ethylene/acrylic acid copolymers were prepared by a constant state, continuous free radical, random polymerization process as described in U.S. Patents 3,520,861 and 4,351,931. They differed in their physical properties, e.g., flow rate, acid number, and density. These properties were controlled by controlling the process conditions. For example, the flow rate was controlled by varying the temperature and pressure of the reaction.

Various physical properties of the four copolymers were determined. These are reported in the following Table I.

TABLE I

| Properties | ASTM Method | Copolymer A | Copolymer B | Copolymer C | Copolymer D |
|---|---|---|---|---|---|
| Acrylic Acid* % by weight | | 3.08 | 3.49 | 9.45 | 5.84 |
| Flow Rate gm/10 minutes | D-1238 Condition A | 0.97 | 3.94 | 4.33 | 20.0 |
| Melt Index** gm/10 minutes | D-1238 Condition E | 100 | 580 | 726 | 2600 |
| Density gm/cc | D-792 | 0.921 | 0.919 | 0.932 | 0.922 |
| Tensile Ultimate MPa | D-632 | 6.76 | 5.86 | 8.27 | 4.83 |
| Elongation % | D-638 | 365 | 175 | 525 | 150 |
| 2% Secant Modulus MPa | D-790 | 89.6 | 82.7 | 62.7 | 65.5 |
| Hardness Shore A | D-2240 | 95 | 95 | 95 | 95 |
| Low Temperature Brittle Point, °C | D-746 | -33° | -23° | -20° | >-20° |
| Izod Impact (-50°C) J/m notch | D-256 | 22 | 20 | 15 | - |
| Vicat Softening °C | D-1525 | 77.3° | 74° | 63° | 60° |
| Ring & Ball Softening °C | E-28 | 116° | 109° | 101° | - |
| Brookfield Viscosity Pa·S (176.7°C) | | 85.2 | 43.0 | 23.4 | 6.95 |

*These can be converted to acid numbers by using known mathematical conversion factors.

**Calculated approximate melt indexes ASTM D-1238 Condition E (190°C under 2160 grams total load).

Example 2

The adhesive properties of Resins A, B and C described in Example 1 were determined by applying approximately a 4.7 mm bead of hot melt adhesive formulation onto various substrates using a Meltex brand hot melt gun and a rotating table. By varying the speed of rotation of the table, air pressure employed to discharge the adhesive and orifice size of the hot melt gun, a relatively constant bead weight (bead size) was applied at an operating temperature of 400°F (204°C). Immediately following the application of the bead to one substrate, a second substrate of the same material as the first was laminated to the first using a 440 gram weight.

The force required to pull the two substrates apart was then determined employing an Instron Tensile Tester (Model 1123) after a period of 24 hours.

The type of substrate employed and the results of these tests are set forth in the following Table II.

TABLE II

| Substrate | Peel Strength (newton/meter width) Resin A | Resin B | Resin C |
|---|---|---|---|
| Kraft Paper (74 g/m$^2$) | 354* | 427* | 429* |
| Aluminum Foil (0.051 mm) | 138 | 245 | 278 |
| Nylon[1] (0.025 mm) | 28 | 53 | 194 |
| LDPE[2] (0.037 mm) | 275 | 263 | 256 |

* The substrate failed before the adhesive.

[1] Nylon - commercial Nylon 6 purchased from Allied Chemical.

[2] LDPE - a 2 melt index homopolymer of polyethylene having a density of 0.922.

Example 3

Tests were conducted by preparing samples using the hot melt gun described in Example 2. The adhesive was extruded from the nozzle onto one end of the substrate, then the end of another substrate was pressed onto the adhesive. Samples were then tested on an Instron Tensile Tester (Model 1123) equipped with an environment chamber. The area of the adhered portion was measured and the lap shear strength was calculated for each sample. The substrate consisted of 2.5 cm wide birch (3.2 mm thick) wood. The resins consisted of Resins A, B and C as reported in Example 1. The results are set forth in Table III.

TABLE III

| Temperature at Which Test Was Conducted | Lap Shear Adhesion (kPa) Resin A | Resin B | Resin C |
|---|---|---|---|
| 72°F (22°C) | 807 | 1130 | 1960 |
| 150°F (65.6°C) | 420 | 430 | 630 |

Example 4

The compatibility of resins A, B and C as reported in Example 1 with various commercially available tackifiers and waxes was determined by observation of phase separation and increase in viscosity, if any. The tests were conducted by placing a 50/50 weight ratio of resin and wax and/or tackifier in a forced air oven at 350°F (176.7°C). The samples were allowed to sit in the oven for 1-1.5 hours and then stirred. They were then allowed to sit in the oven for a period of 12 to 18 hours. The samples were then examined for phase separation (i.e., separation into two or more layers). Using a glass stirring rod, the viscosity of the hot mixture was examined (visually and physically) for any significant increase or decrease in viscosity over the sample as originally mixed and stirred after a period of 1 to 1.5 hours. Those mixtures where phase separation occurred or those which thickened significantly, were determined to be incompatible. It was found that the resins were compatible with the following materials.

TABLE IV

| Tackifiers | Waxes |
|---|---|
| **Rosin Esters - Hydrogenated** | **Polyethylene** |
| | Polywax 655 (6) |
| Foral 85 (1) | Epolene C-16 (7) |
| Staybellite Ester 10 (1) | Epolene D-43 (7) |
| Staybellite Ester 5 (1) | Epolene N-10 (7) |
| Foral 105(1) | |
| Staybellite (1) | |
| **Rosin Esters** | **Oxidized Polyethylene** |
| Pentalyn 344 (1) | Vestowax AW-1050 (8) |
| | Vestowax AO-1699 (8) |
| | Vestowax AS-1551 (8) |
| | 629 (10) |
| | 655 (10) |
| | 316 (10) |
| | Polywax E-2020 (6) |
| **Rosin Esters - Dibasic Acid** | |
| Cellolyn 21 (1) | |
| **Rosin-Hydrogenated** | **Microcrystalline** |
| Pexalyn A600 (1) | Amber Ultraflex (6) |
| Pexalyn A500 (1) | Victory (6) |
| | Starwax 100 (6) |
| | Be Square 195 (6) |
| | Fortex (6) |
| | 180-M (9) |
| **Terpene Hydrocarbons** | **Paraffin** |
| Wingtack 95 (4) | 140/45 (11) |
| Zonatac 105 (3) | |
| Piccolyte A125 (1) | |
| Piccolyte S125 (1) | |
| **Terpene Phenolic** | **Oxidized Paraffin** |
| Piccofyn A135 (1) | Durachem B120 (8) |
| **Aromatic Hydrocarbons** | **Oxidized Hydrocarbon** |
| Cumar P-25 (2) | Duroxon R-21 (8) |
| | Efton D-Super (8) |

TABLE IV Continued

| Tackifiers | Waxes |
|---|---|
| Aliphatic Hydrocarbons | Synthetic Waxes |
| Escorez 1310 (5) | |
| Escorez 2101 (5) | Cardis 319 (6) |
| | Petrolite C-7500 (6) |
| | Petrolite C-400 (6) |
| | Cardipol LP (6) |

(1) Hercules
(2) Neville
(3) Arizona
(4) Goodyear
(5) Exxon
(6) Barreco
(7) Eastman
(8) Durachem
(9) Witco
(10) Allied
(11) National Wax

Claims:

1. A hot melt adhesive and coating composition comprising: a normally solid ethylene/acrylic acid or methacrylic acid copolymer characterized as falling within the boundries defined by Points A, B, D and E of the trapezoidal figure set forth in the Drawing, wherein Points A, B, D and E represent the following characteristics of the copolymer; A, a copolymer having an acid number of 23 and a flow rate of 0.97; B, a copolymer having an acid number of 93 and a flow rate of 69; D, a copolymer having an acid number of 8 and a flow rate of 69; and E, a copolymer having an acid number of 8 and a flow rate of 0.97.

2. The compositions of Claim 1 including a tackifier.

3. The compositions of Claim 1 including a wax.

4. The compositions of Claim 1 including a wax and a tackifier.

5. The composition of Claim 1 wherein the copolymer is an ionomer.

6. A hot melt adhesive and coating composition comprising: an ethylene-acrylic acid or methacrylic acid copolymer characterized as falling within the boundaries defined by Points A, C, D and E of the trapezoidal figure set forth in the Drawing wherein Points A, C, D, and E represent the following characteristics of the copolymer; A, a copolymer having an acid number of 23 and a flow rate of 0.97; C, a copolymer having an acid number of 65 and a flow rate of 69; Point D, a copolymer having an acid number of 8 and a flow rate of 69; and E, a copolymer having an acid number of 8 and a flow rate of 0.97.

7. The composition of Claim 6 including a wax and a tackifier.

8. The composition of Claim 6 wherein the copolymer is an ionomer.

9. A method of bonding two substrates together which comprises applying to the surface of at least one first substrate, the composition of Claim 1 at a temperature ranging from 93° to 232°C, compressing to the first substrate in contact with the hot melt adhesive a second substrate and permitting the substrates to become bonded.

10. A method of bonding two substrates together which comprises: applying to the surface of at least one first substrate, the composition of Claim 6 at a temperature ranging from 93° to 232°C, compressing to the first substrate in contact with the hot melt adhesive composition a second substrate and permitting the substrates to become bonded.

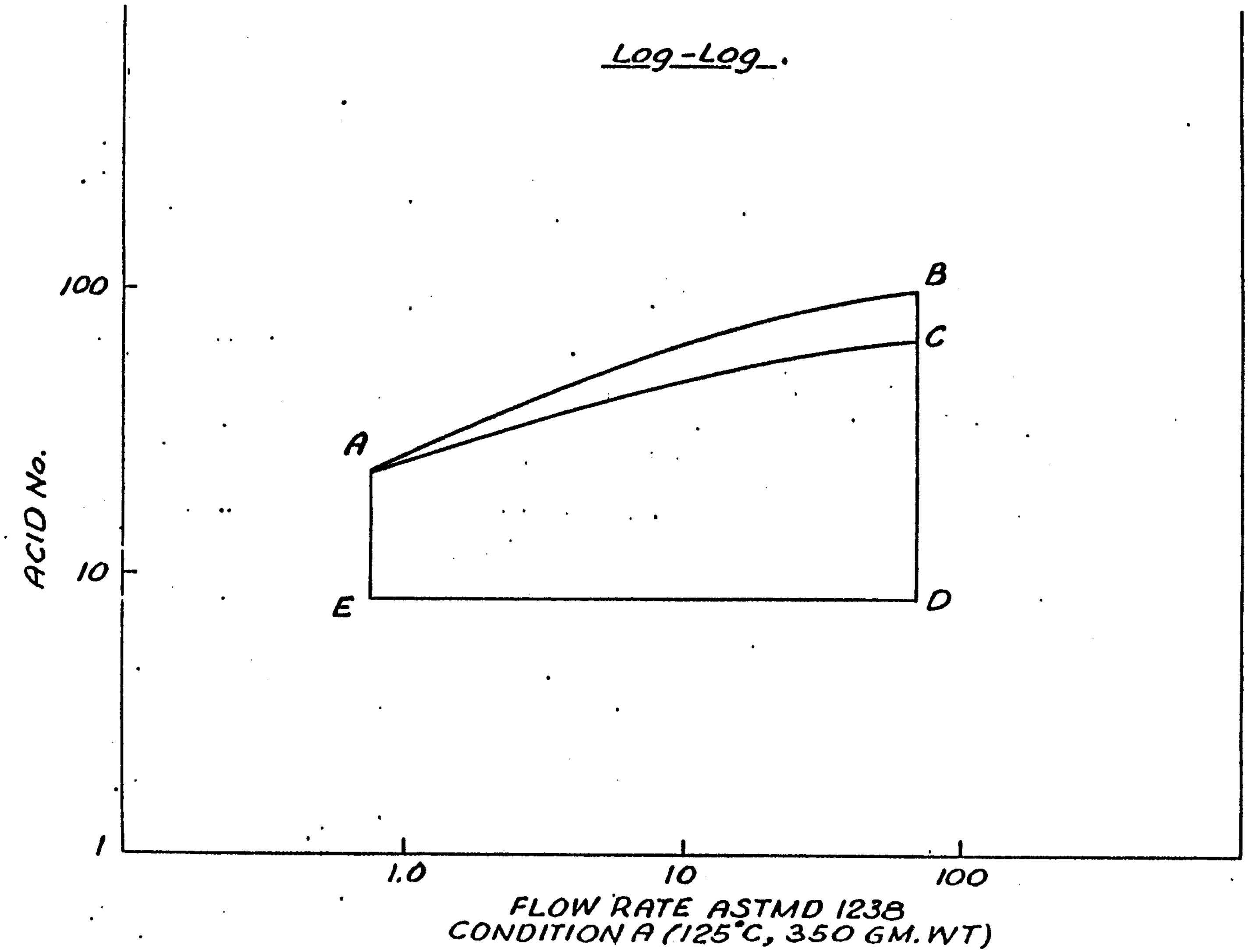
Log-Log.
ACID No.
100
10
1
A
B
C
D
E
1.0
10
100
FLOW RATE ASTMD 1238
CONDITION A (125°C, 350 GM. WT)

European Patent Office

**EUROPEAN SEARCH REPORT**

0140019

Application number

EP 84 11 0320

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 179 059 (ESSO RESEARCH AND ENGINEERING) * Claim 1; page 4, line 27 - page 5, line 9; page 6, lines 7-24; page 12, lines 7-23 * --- | 1-10 | C 08 L 23/08<br>C 09 J 3/14<br>C 09 D 3/733<br>C 08 L 51/06 |
| X | US-A-4 283 317 (C.V. MURPHY) * Claim 1; examples 1-8; column 6, lines 58-62 * --- | 1-10 | |
| D,X | US-A-4 018 733 (E.F. LOPEZ) * Claim 1; column 3, line 7 - column 5, line 33; column 16, lines 30-43 * --- | 1-10 | |
| A | US-A-4 105 611 (G.O. ORTH) * Abstract; column 3, lines 39-58 * --- | 1 | TECHNICAL FIELDS SEARCHED (Int. Cl.4) |
| A | US-A-3 406 127 (R.L. ALEXANDER) * Abstract; claim 1 * ----- | 1 | C 08 L<br>C 09 D<br>C 09 J |

The present search report has been drawn up for all claims

| Place of search | Date of completion of the search | Examiner |
|---|---|---|
| THE HAGUE | 30-01-1985 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82